# EUROPEAN PATENT SPECIFICATION

(11) **EP 2 140 176 B1**
(45) Date of publication and mention of the grant of the patent: **24.04.2013**
(21) Application number: 08707723.6
(22) Date of filing: 14.02.2008
(51) Int. Cl.: F16H 61/30

(54) **GEAR SHIFT SYSTEM**
MECHANISCHE SCHALT-SERVOREDUKTION
SERVO-REDUCTION DE CHANGEMENT DE VITESSES MECANIQUE

(30) Priority: 26.03.2007 EP 07006173
(43) Date of publication of application: 06.01.2010
(73) Proprietor: Kongsberg Automotive AS, 3601 Kongsberg (NO)
(72) Inventor: GUNNERUD, Morten, Berger, N-3614 Kongsberg (NO); SUNDKVIST, Arild, N-3610 Kongsberg (NO); NORHEIM, Daniel, N-3612 Kongsberg (NO)
(74) Representative: UEXKÜLL & STOLBERG
(86) International application number: PCT/EP2008/001138
(87) International publication number: WO 2008/116531

(56) References cited:
- EP-A- 0 984 210
- DE-A1- 2 927 666

## Description

The present invention relates to a gear shift system comprising a shift lever, a gearbox, a servo mechanism, a medium for transferring shift commands from the shift lever to the servo mechanism and a servo actuation lever, wherein a shift command is transferred by said medium to a gearbox shaft via at least one lever arm, including at least one shift actuation lever, the servo mechanism is controlled by at least one servo valve, and the at least one servo valve is controlled by the servo actuation lever arranged to transfer movement of the medium for transferring shift commands to the servo valve, wherein the servo actuation lever has a portion arranged with a limited play to a portion of the gearbox shaft allowing a displacement of said portion of the servo actuation lever in relation to said gearbox shaft.

Manual shifting systems for heavy vehicles are commonly equipped with a servo mechanism to provide an assistance force allowing the driver to shift gears easily. Implementing an assistance force increases the total force on the gear shift system substantially.

A manual shifting system equipped with a servo mechanism to provide assistance force is described in DE 29 276 66. The shifting system described therein comprises a gear selector shaft connected to a transmission arm by means of a cogwheel mechanism to transfer a shift command to the gearbox. A movement within a limited play between the tooth surfaces in the cogwheel mechanism between the gear selector shaft and the transmission arm is used to actuate a servo mechanism by means of a blocking element to apply a servo assistance force.

It is disadvantageous about the system described in DE 29 276 66 that a considerable manual force must be applied to actuate the servo mechanism by means of a blocking element. That system is primarily designed to shift gears manually and to add a servo assistance force only in case the manual force does not suffice to shift gears. That solution is therefore not directed to a maximal driving comfort but to the sheer ability to shift gears of a gear shift system with a high resistance force. The described system can not provide the high driving comfort expected by a customer of a modern vehicle.

A further disadvantage of the system described in DE 29 276 66 is the fact that the manufacture and adjustment of the tooth surfaces in the cogwheel mechanism needs high precision and fine-tuning. This makes the system very expensive and inflexible concerning various configurations of different customers and gearbox systems.

The object of the present invention is to achieve an improved, inexpensive and flexible gear shift system with a servo assistance force providing a high driving comfort.

According to the present invention this object is solved by the subject-matter of claim 1. Preferred embodiments of the invention are indicated in the dependent claims 2 to 17, wherein a first preferred embodiment is covered by claims 2 to 12 and a second preferred embodiment is covered by claims 13 to 17.

The inventive gear shift system comprises a shift lever, a gearbox, a gearbox shaft, a servo mechanism, a medium for transferring shift commands from the shift lever to the servo mechanism and a servo actuation lever, wherein a shift command is transferred by said medium to a gearbox shaft via at least one lever arm, including at least one shift actuation lever. The servo mechanism is controlled by at least one servo valve, and the at least one servo valve is controlled by the servo actuation lever arranged to transfer movement of the medium for transferring shift commands to the servo valve. A portion of the servo actuation lever is arranged with a limited play to a portion of the gearbox shaft allowing a displacement of said portion of the servo actuation lever in relation to said gearbox shaft. The servo actuation lever of the inventive gear shift system is connected to the shift actuation lever so as to be rotatable about an axis essentially parallel to the longitudinal axis of the gearbox shaft within the limited play between the portion of the gearbox shaft and the portion of the servo actuation lever.

The shift lever is usually adapted to transfer a shift command in form of a manual force of the driver towards the system. A rotational movement of the gearbox shaft about its longitudinal axis usually transfers the force needed to shift gears towards the gearbox. The rotational movement of the gearbox shaft about its longitudinal axis is preferably caused by a pivotal movement of the shift actuation lever extending radially from the gearbox shaft. The servo mechanism is preferably arranged to apply a servo turning moment on the shift actuation lever, wherein the servo mechanism is controlled by at least one servo valve. The servo actuation lever, which is preferably arranged rotatably about the longitudinal axis of the gearbox shaft and with a limited play for a movement relative to the gearbox shaft, controls the at least one servo valve.

It should be noted that the term "force" here also applies to a corresponding turning moment caused by a physical force depending on the distance of the working point to an axis of rotation. A "force" as used herein may be subject to one or more transmission operations such that its effective nominal value at a certain point may depend on one or more transmission ratios or lever arms. A "force" as used herein is merely characterised by its origin and is then transferred mechanically through the system.

In a first preferred embodiment, the shift lever is adapted to transfer a shift command in form of a manual force of the driver towards the servo actuation lever to cause a rotation of the servo actuation lever about the axis parallel to the longitudinal axis of the gearbox shaft within the limited play between the gearbox shaft and the servo actuation lever. As soon as one end stop of the limited play is reached, the relative movement between the servo actuation lever and the shift actuation lever stops and the servo actuation lever rotates concertedly with the shift actuation lever around the longitudinal axis of the gearbox shaft to cause a rotation of the gearbox shaft.

It is advantageous if the gear shift system comprises two servo valves of which either the one or the other is fully opened when the servo actuation lever has reached the one or the other end of the limited play, respectively. Preferably, a central position in the limited play corresponds to a closed position of both servo valves resulting in no servo assistance force. The servo actuation lever preferably takes this central position automatically after each gear shifting operation, i.e. when no manual force is applied any more to the shift lever and no further gear shifting is desired, e.g. when the desired neutral gear position is reached or the desired gear is fully engaged.

In order to keep one valve fully opened during concerted rotation of the servo actuation lever, the shift actuation lever and the gearbox shaft around the longitudinal axis of the gearbox shaft, the servo actuation lever preferably comprises an outer circumferential surface with a central axis corresponding to the longitudinal axis of the gearbox shaft when the servo actuation lever is in a central position within the limited play. This outer circumferential surface of the servo actuation lever is preferably in constant sliding abutment contact with means for actuating the servo valves. These means for actuating the servo valves may be arranged in opposition to each other in a point symmetric arrangement to abut against the outer circumferential surface of the servo actuation lever from opposing sides. This embodiment has the advantage that during a concerted rotation of the servo actuation lever, the shift actuation lever and the gearbox shaft around the longitudinal axis of the gearbox shaft the servo valves essentially remain in their position. On the other hand, a rotation of the servo actuation lever about the axis parallel to the longitudinal axis of the gearbox shaft within the limited play between the gearbox shaft and the servo actuation lever causes an opening or closing of the one or the other servo valve.

Commonly, the type of the used servo valve(s) is a check valve that allows an air flow from an air pressure supply to a servo cylinder. To assist gear shift commands from both forward and backward shift lever movements the servo cylinder comprises commonly two active chambers separated by a piston that is prepared for receiving air pressure from either the one or the other chamber and transferring the force from the air pressure in either direction as the assistance force to the gearbox shaft by a bidirectional movement. In such a gear shift system it is sensible to control the air flow from the air pressure supply to each chamber of the servo cylinder with a servo valve. As the two servo valves act in this case corresponding to the chambers in the servo cylinder in opposition to each other, it is especially advantageous to arrange the servo valves in opposition to each other in a point symmetric arrangement with respect to the longitudinal axis of the gear shaft and in mechanical communication with each other. This arrangement has the advantage that the medium for transferring shift commands to the servo valves comprises only one component, i.e. the servo actuation lever. However, the medium for transferring shift commands from the shift lever to the servo mechanism via the servo valves may also comprise additional components.

The one or the other servo valve is opened gradually as the manual force on the shift lever that is transferred to the servo valve via said medium increases. Therefore, the assistance force increases correspondingly with the applied manual force on the shift lever as long as the servo actuation lever rotates within the limited play between the gearbox shaft and the servo actuation lever. It should be noted that the spring force of the servo valves can be chosen to be very low compared to the maximal servo assistance force or the total force needed to shift gears in the gearbox, respectively. The manual force needed to open the servo valve may even be magnitudes lower than the maximal servo assistance force.

Although the manual force adds to the servo assistance force to a total force applied on the gearbox shaft to shift gears in the gearbox, the fraction of the manual force can be negligible such that a high driving comfort is provided.

In the first preferred embodiment of the invention, when the manual force opens the servo valves up to a determined degree of maximum opening, the pivoting of the servo actuation lever about the axis parallel to the longitudinal axis of the gearbox shaft is limited by the gearbox shaft protruding through an opening in the servo actuation lever.

It is preferred that the shift actuation lever extends radially from the gearbox shaft and is arranged to transfer a shift command by means of a rotational movement about the longitudinal axis of the gearbox shaft. By this, the servo mechanism may be arranged to apply a servo turning moment on the shift actuation lever and therefore cause or support a rotation of the gearbox shaft. For example, the servo mechanism may be arranged to apply a bidirectional servo turning moment on the shift actuation lever, wherein the direction of the turning moment depends on which one of the servo valves is actuated. For this purpose the servo mechanism may comprise a hydraulic or pneumatic servo cylinder which is arranged to apply a pressure force causing a servo turning moment on the shift actuation lever.

The servo actuation lever may be arranged rotatably about the longitudinal axis of the gearbox shaft with a limited play between the gearbox shaft and the servo actuation lever. For example, the servo actuation lever may comprise an opening through which the gearbox shaft protrudes, wherein the radial extension of the opening is larger than the radial extension of the gearbox shaft. The opening may be fully encircled by a portion of the servo actuation lever such as a bore, a lug or a hole or it may be only partly encircled by a portion of the servo actuation lever such as a U-shaped recess. This portion of the servo actuation lever serves as a cam for actuating the servo valve(s). In this configuration the servo actuation lever may be arranged to transfer the manual force on the shift lever towards at least one of the servo valves within the limited play between the gearbox shaft and the servo actuation lever. When the servo actuation lever has reached an end stop of the limited play between the gearbox shaft and the servo actuation lever, the servo actuation lever may transfer the manual force on the shift lever to apply a manual turning moment on the shift actuation lever adding to the assistance turning moment.

In order to exploit the full assistance force a servo valve is preferred to be fully opened when the servo actuation lever reaches an end stop of the limited play between the gearbox shaft and the servo actuation lever such that a maximal servo turning moment is applied on the shift actuation lever.

A second preferred embodiment of the invention deals with the problem that implementing an assistance force increases the total force on the gear shift system substantially. Thus, there is an enhanced risk of damaging the gearbox by applying an excessive force. Especially, the synchronisation rings will be damaged if they are exposed to an exceedingly high total force.

There are mechanisms or devices known as servo reducer in the prior art providing solutions to the mentioned problem by reducing the assistance force and the total force in the gearbox. Such a servo reducer is described in WO 2005/119100, where the total force on the shift lever is held constant or where it is reduced when the force on the shift lever exceeds a predefined threshold value. On the one hand a very good gearbox protection and a comfortable gear lever handling is provided. On the other hand the solution described involves additional valves for regulating the pressure in a servo cylinder and is rather complex and expensive regarding the production costs and size.

US 6,851,350 presents an actuating pneumatic cylinder with a piston provided with non-return valves in combination with external solenoid valves to prevent an unintended release of a clutch.

Documents WO 00/14437 and WO 2005/022007 describe assisted gear shift systems with a reducing mechanism controlling the assistance pressure supplied.

Most of these known solutions have the drawback of a more or less complex external reducing mechanism, which is expensive regarding the production costs and size. Known and less complex solutions only limit the assistance force to a maximal value providing a weak gearbox protection against further application of a high manual force to the gear lever.

In combination with the present invention an implemented reducing mechanism achieves a simple, less costly and more space saving servo reducing mechanism in an assisted gear shift system for providing a high gearbox protection without introducing a large number of additional parts or new valves.

According to the second preferred embodiment of the present invention the reducing mechanism is arranged to decouple servo valve and the medium for transferring shift commands when the applied force on the shift lever exceeds a threshold value. The servo valve is closed at high forces exceeding a threshold value. The servo assistance force is hence reduced and mainly the manual force on the shift lever applied by the driver will remain acting on the gearbox. The total force, which is defined as the sum of assistance force and manual force applied by the driver and dominated by the assistance force during normal operation, is strongly and swiftly decreased in the instance of an exceedingly high manual force leading to a strong reduction of the servo assistance force.

Preferably, the reducing mechanism is purely mechanic. In such a mechanical embodiment the reducing mechanism is arranged between the lever arm and servo valve units of a manual shifting system equipped with a servo mechanism.

Commonly, the type of the servo valve(s) is a check valve that allows an air flow from an air pressure supply to a servo cylinder. To assist gear shift commands from both forward and backward shift lever movements the servo cylinder comprises commonly two active chambers separated by a piston that is prepared for receiving air pressure from either the one or the other chamber and transferring the force from the air pressure in either direction as the assistance force to the gearbox shaft by a bidirectional movement. In such a gear shift system it is sensible to control the air flow from the air pressure supply to each chamber of the servo cylinder with a servo valve. As the two servo valves act in this case corresponding to the chambers in the servo cylinder in opposition to each other, it is further sensible to arrange the servo valves in opposition to each other in a point symmetric arrangement and in mechanical communication with each other. This arrangement has the advantage that only one medium for transferring shift commands from the shift lever to the servo valves is necessary.

In a preferred embodiment of the invention the reducing mechanism comprises a control ring and a control lever in mechanical contact. Preferably, both the control ring and the control lever are pivotably connected to a valve actuation lever that acts as the medium for transferring shift commands from the shift lever to the servo valves. The control ring is connected pivotably around a control ring pivot axis to the valve actuation lever biasing at two opposite contact portions with its outer ring surface directly or via a steep connections against the valve bodies such that pivoting results in actuating or closing of the one or the other servo valve. As the valve actuation lever is itself arranged pivotably around an actuation lever pivot axis the pivoting of the control ring can conduct around the control ring pivot axis and/or the actuation lever pivot axis. Preferably, the control ring comprises on the opposite side of the pivotal connection to the servo actuation lever a groove that engages one first end portion of the control lever. The control lever with a first end portion and a second end portion is itself connected pivotably around a control lever pivot axis between the end portion to the servo actuation lever such that the first end portion engaged by the groove in the control ring is released from the groove at a certain degree of deflexion relative to the servo actuation lever. The control lever pivot axis can also be identical to the actuation lever pivot axis and the control lever can therefore also be connected pivotably to means used as the actuation lever pivot axis. As long as the first end portion of the control lever is engaged by the groove in the control ring a pivotal movement of the control lever relative to the servo actuation lever coincides with a pivotal movement of the control ring around the control ring pivot axis. The second end portion of the control lever is also pivotable around the control lever pivot axis. Two loaded control springs abutting against opposite lugs of the servo actuation lever bias from one and the other pivot direction against the second end portion of the control lever. The control lever is therefore spring loaded into both pivot directions.

As long as the manual force on the shift lever transferred to the servo actuation lever is normal, i.e. below a threshold value, the first end of the control lever engaged by the groove of the control ring prevents a pivoting of the control ring relative to the servo actuation lever around the control ring pivot axis. The control ring pivots in coincidence with the servo actuation lever around the servo actuation lever pivot axis. This pivotal movement actuates the one or the other servo valve via the contact portion on its outer ring surface.

The one or the other servo valve is opened gradually as the manual force on the shift lever that is transferred to the servo valve via the medium increases. Therefore, the assistance force increases correspondingly with the applied manual force on the shift lever as long as the manual force is normal, i.e. below a threshold value.

When the manual force has reached a certain value that is large enough to open the servo valves up to a determined degree of maximum opening, the pivoting of the control ring around the servo actuation lever pivot axis is limited by means fixed to the chassis. These means can be a rod or a bar arranged to protrude into the ring opening and limiting the pivot movement when contact with the inner ring surface is made. One could also think of limiting lugs or flanges engaging the control ring at a maximal degree of deflexion.

When the state of maximum opening is reached the one or the other servo valve does not open further when the manual force applied to the shift lever is further increased. The servo assistance force has therefore reached a maximum value. As the pivotal movement of the control ring is limited it can not follow a further pivotal movement of the servo actuation lever induced by a further increased manual force on the shift lever. This results in a countercheck force imposed by the limiting means on the control ring to pivot around the control ring axis relative to the servo actuation lever. This force is transmitted to the control lever via the engaged first end portion in the groove of the control ring to pivot around the control lever axis. As the second end portion is spring loaded into both pivot directions the transferred force is countered by the spring forces of the control springs. When the manual force applied to the shift lever increases further such that the transferred force larger enough to overcome the spring forces of the control springs a concerted pivot movement of both the control ring and the control lever around the control ring pivot axis and the control lever pivot axis, respectively, relative to the servo actuation lever is performed. The part of the first end portion that is engaged by the groove in the control ring decreases when the degree of deflexion of this concerted pivot movement increases.

The circular paths of the first end portion and the groove of the control ring relative to the servo actuation lever branch out. When the manual force applied to the shift lever is increased above a threshold value the concerted pivot movement relative to the servo actuation lever reaches a degree of deflexion when the first end portion of the control lever is completely released off the groove of the control ring and the frictional contact force between control ring and control lever falls down abruptly. The servo valve and the medium for transferring shift commands, i.e. the servo actuation lever, are decoupled in the moment when the applied force on the shift lever exceeds the threshold value. The control ring is then almost free to pivot around the control ring pivot axis. The fully opened servo valve that is under full spring load then draws back the almost freely pivotable control ring via the contact portions on the outer ring surface such that the servo valve closes immediately.

In normal operation the gear shift action takes place on application of a normal manual force below the threshold value. Application of a higher manual force leads to a strongly reduced total force that is transmitted to the gearbox in order to protect it.

Two preferred, non-limiting embodiments of the present invention will now be described in more detail with references to the accompanying drawings, where:
Figure 1 is a perspective rear view of a first embodiment of the gear shift system including the servo mechanism.
Figure 2 is a perspective front view of the first embodiment of the gear shift system.
Figure 3 is a cross-sectional side view of the first embodiment of the gear shift system.
Figures 4 to 9 are front views of the first embodiment of the gear shift system at different stages of movement and with different forces applied to the shift lever.
Figure 10 is a graph showing the force transmitted to the gearbox as a function of the force applied to the shift lever by the driver.
Figure 11 is a perspective view of a second preferred embodiment of the gear shift system with a reduction mechanism.
Figure 12 is a cross-sectional side view of the second preferred embodiment of the gear shift system with a reduction mechanism.
Figure 13 is a front view of the second preferred embodiment of the gear shift system with a reduction mechanism.
Figures 14 to 18 are front views of the second preferred embodiment of the gear shift system with a reduction mechanism at different stages of movement and with different forces applied to the shift lever.
Figure 19 is a graph showing the force transmitted to the gearbox as a function of the force applied to the shift lever by the driver including the effect of the reduction mechanism.

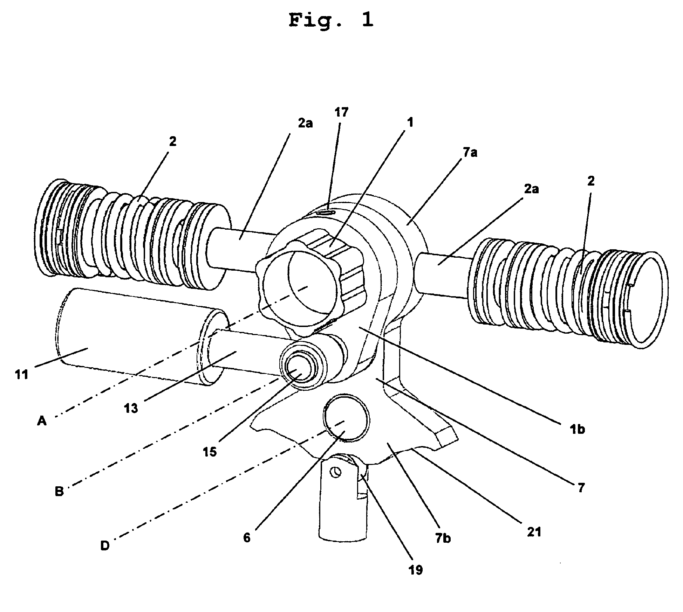

Figure 1 gives an impression of a first embodiment of the gear shift system in a perspective rear view. A gearbox shaft 1 with a longitudinal axis A is shown cut such that other parts of the system are visible. In fact, the gearbox shaft 1 extends along axis A towards the gearbox (not shown). The outer surface of the gearbox shaft 1 shows an outer profile with radial protrusions in order to receive and transfer shift commands by rotation about its longitudinal axis A. The gearbox shaft 1 is enclosed by a shift actuation lever 1b which extends radially from the gearbox shaft 1 to an axis B parallel to the axis A. The shift actuation lever 1b comprises an opening with an inner profile matching to the outer profile of the gearbox shaft 1 such that the shift actuation lever 1b can be slid onto the gearbox shaft 1. Fixing means 17 such as a bolt or a screw secures the shift actuation lever 1b to the gearbox shaft 1. By this arrangement it is achieved that a pivot movement of the shift actuation lever 1b about the axis A results in a rotational movement of the gearbox shaft 1 about axis A. The axis A is fixed in the reference frame of the vehicle, whereas the axis B may perform together with the shift actuation lever 1b and the gearbox shaft 1 a rotational movement about axis A.

A servo mechanism including an air pressure servo cylinder 11 and a servo piston 13 is connected via a pin 15 to the shift actuation lever 1b. The longitudinal axis of pin 15 corresponds to axis B. By this arrangement, the servo mechanism may apply an essentially tangential servo assistance force on the shift actuation lever 1b to pivot about axis A and to drive the rotation of the gearbox shaft 1 in order to perform a gearshift operation in the gearbox. The lever arm of the servo assistance force to support the gearshift operation is given by the distance between the axes A and B, i.e. essentially by the radial extension of shift actuation lever 1b.

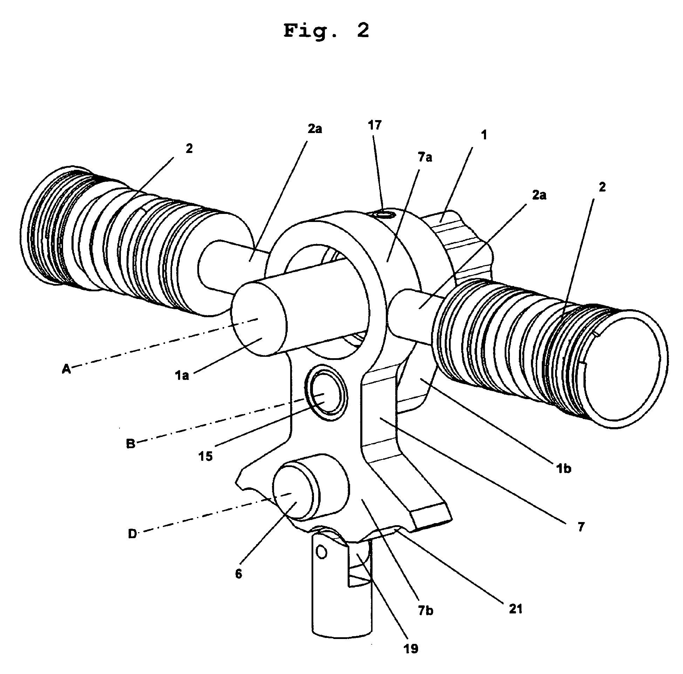

Figure 2 shows a first embodiment of the gear shift system in a perspective front view. It is clearly visible how a portion 1a of the gearbox shaft 1 protrudes through an opening in the portion 7a of the servo actuation lever 7 such that there is a certain play between these portions 1a, 7a. The servo actuation lever 7 is rotatably connected by a pin 15 to the shift actuation lever 1b. The manual force on the shift lever (not shown) is transferred to the servo actuation lever 7 via the shift lever connection point 6. The manual force acts perpendicular to an axis D and essentially tangentially with respect to axis B causing a rotational movement of the servo actuation lever 7 about axis B within the limited play between the portion 1a of the gearbox shaft 1 and the portion 7a of the servo actuation lever 7. This rotational movement of the servo actuation lever 7 about axis B actuates one of the two servo valves 2 which are in abuttment contact with the outer circumferential surface of the portion 7a of the servo actuation lever 7 via appendices 2a.

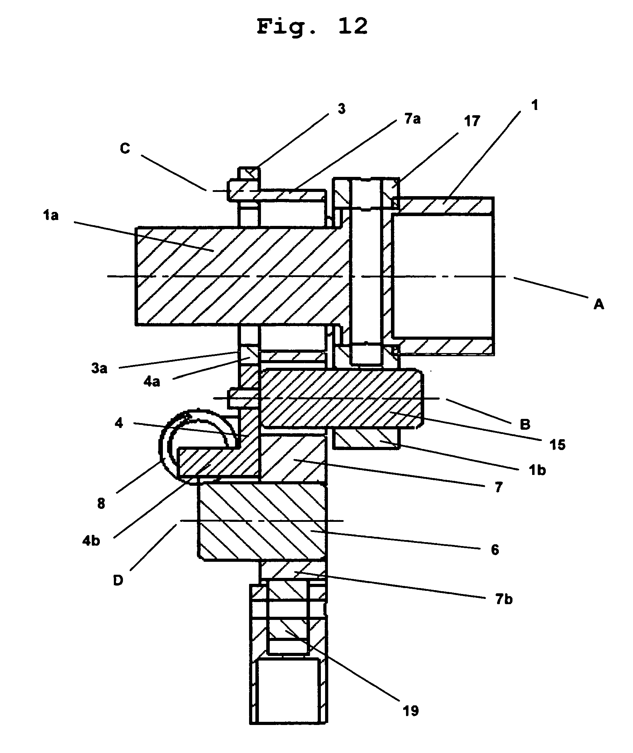

The assistance force from the servo cylinder (not shown in Figs. 2 to 19) is transferred to the shift actuation lever 1b via the pin 15. The assistance force acts perpendicular to axis B and essentially tangentially with respect to axis A causing a turning moment on the shift actuation lever 1b about axis A. It depends on the resistance force in the gearbox whether the gearbox shaft 1 rotates on application of the assistance turning moment or not. In addition to the assistance force the manual force on the shift lever connection point 6 plus the corresponding reactive spring force of the servo valve 2 add to the total turning moment about axis A. It should, however, be noted that the assistance force is usually factors higher than the manual force and the corresponding reactive spring force, respectively.

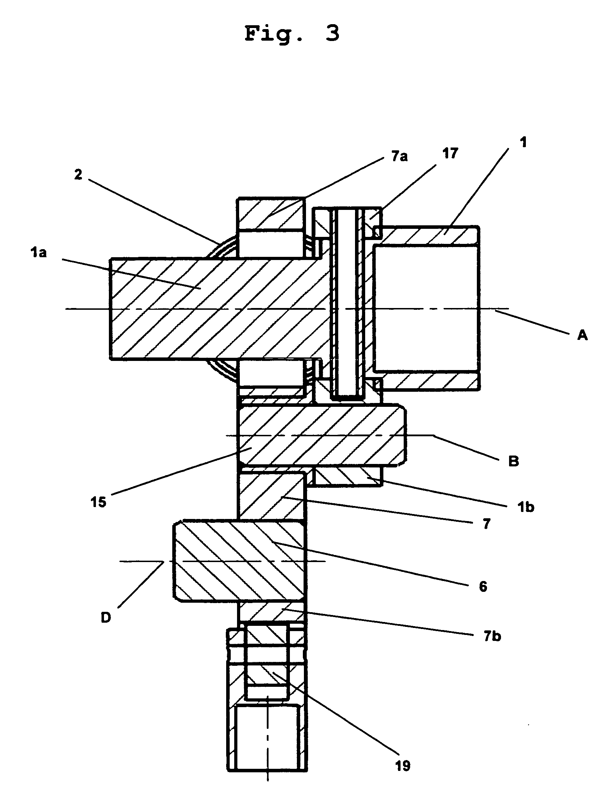

It can be seen from the cross-sectional side view of the first embodiment of the gear shift system in figure 3 that the shift actuation lever 1b is fixed to the gearbox shaft 1 by a bolt 17. The bolt 17 extends perpendicular to the axis A through the gearbox shaft 1 and secures the shift actuation lever 1b against a longitudinal displacement along the axis A. The pin 15 with a longitudinal axis B parallel to the longitudinal axis A of the gearbox shaft 1 connects the shift actuation lever 1b to the servo actuation lever 7. The portion 7a of the servo actuation lever 7 comprises an opening with a diameter larger than the outer diameter of the portion 1a of the gearbox shaft 1 protruding through the opening. The difference in the diameters results in a limited play. Within this limited play a rotation of the servo actuation lever 7 about axis B relative to the shift actuation lever 1b is possible. Such a rotation may be caused by a manual force which is transferred from the shift lever (not shown) to the shift lever connection point 6.

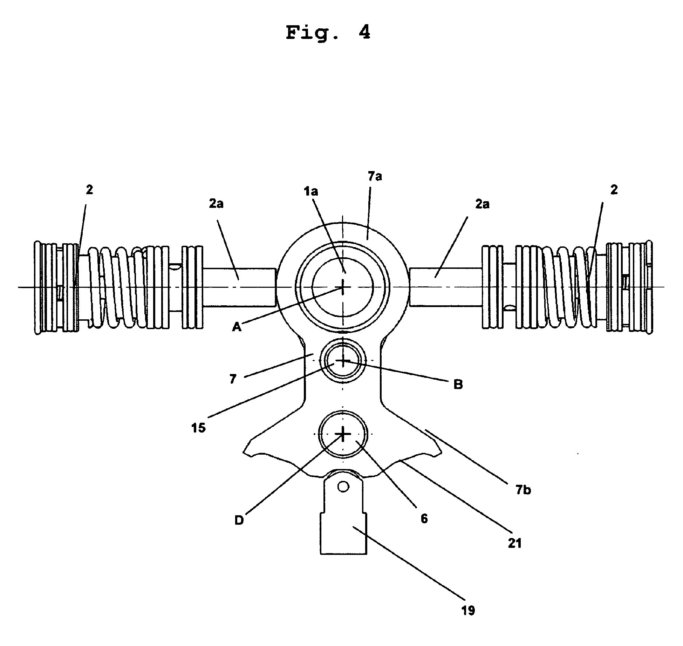

Figures 4 to 9 illustrate in five front views of the first embodiment of the gear shift system how the system works at different stages of movement. Different manual forces are applied at the different stages, but it should be noted that the manual force varies in a range far below the range of the total force that is necessary to shift gears.

Figure 4 shows the system in a neutral gear position where no force is applied. The portion 7a of the servo actuation lever 7 is symmetrically positioned around the portion 1a of the gearbox shaft 1 protruding through its opening. Therefore, the servo actuation lever 7 takes a central position within the limited play in this neutral gear position without forces applied.

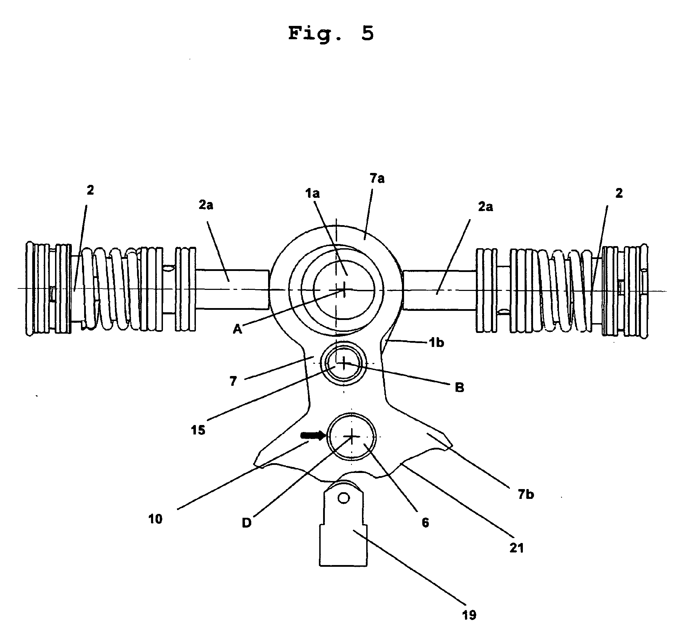

In figure 5 a first manual force, indicated by arrow 10, is applied to the shift lever connection point 6 such that the servo actuation lever 7 is rotated counter-clockwise about a certain path about axis B. The outer circumferential surface of the portion 7a of the servo actuation lever 7 urges the left appendix 2a of the servo valve 2 to open the servo valve 2. It should be noted that the spring force of the servo valve 2 is factors lower than the resistance force in the gearbox preventing a premature rotation about axis A. By opening of the servo valve 2 an assistance force according to the opening state of the servo valve 2 is applied to the pin 15. As pin 15 and axis B are not yet rotated with respect to figure 4, the resistance force in the gearbox is still larger than the total force, i.e. the sum of assistance force, manual force and reactive spring force, applied to the axis B.

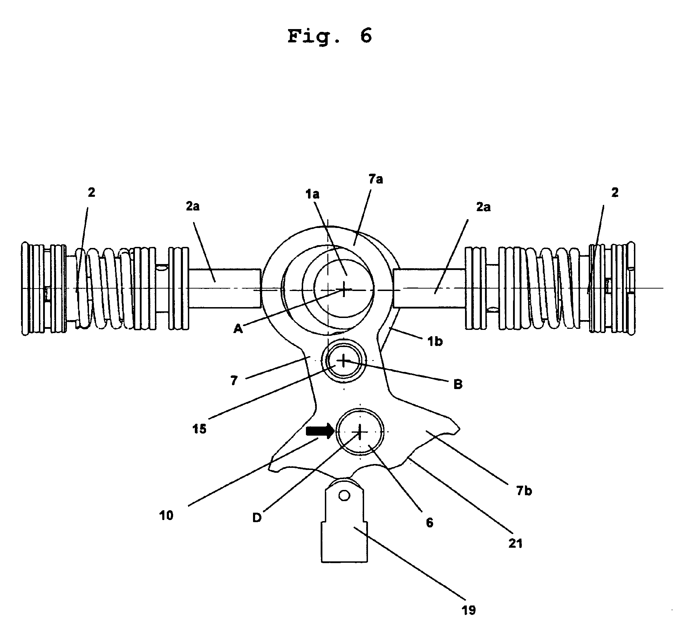

In figure 6 the manual force, indicated by arrow 10, is increased with respect to figure 5 such that the servo valve 2 is opened to its maximum. In this situation the end stop of the limited play is reached and the portion 7a of the servo actuation lever 7 touches the portion 1a of the gearbox shaft 1. The maximal assistance force and reactive spring force are now applied to the shift actuation lever 1b in order to rotate the gearbox shaft 1 in a counter-clockwise way for shifting gears. However, in this example the total force, i.e. the sum of assistance force, manual force and reactive spring force, does not yet suffice to overcome the resistance force in the gearbox. The shift actuation lever 1b and the gearbox shaft 1 have just not yet rotated.

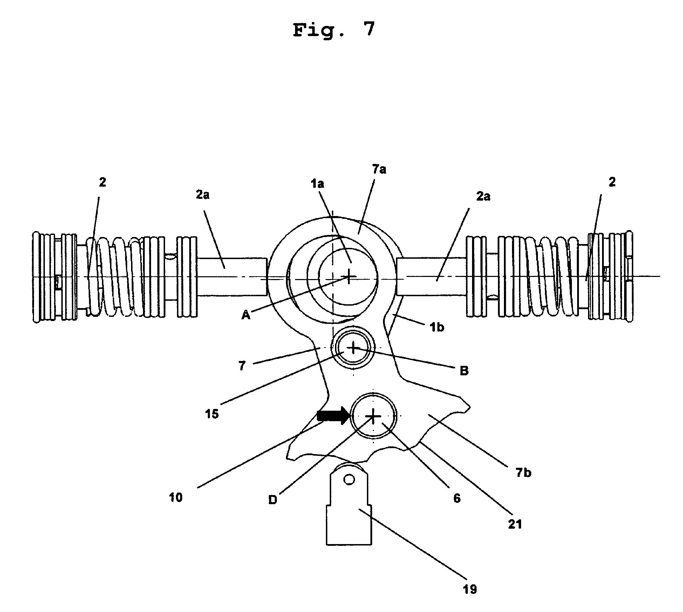

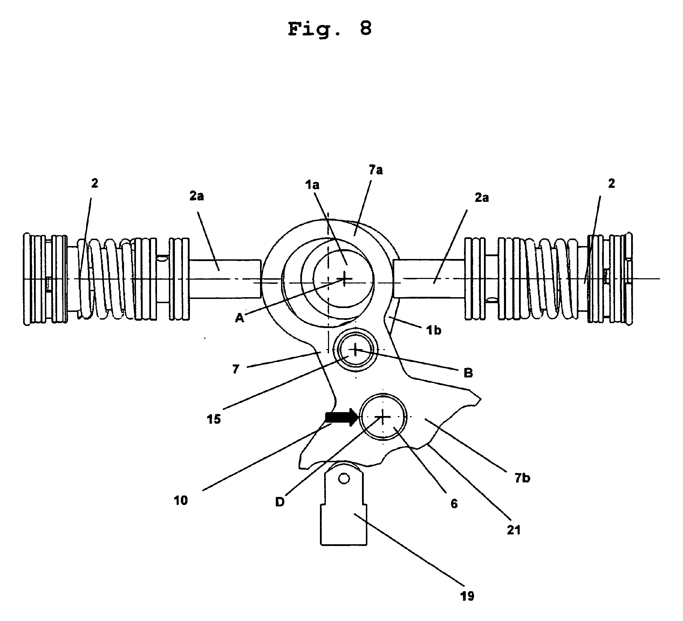

Figures 7 and 8 show the situation in which the manual force, indicated by arrow 10, is slightly further increased to overcome the resistance force in the gearbox. The total force, i.e. the sum of assistance force, manual force and reactive spring force, applied to the axis B is now larger than the resistance force such that the shift actuation lever 1b and the gearbox shaft 1 rotate in a counter-clockwise way about axis A. The effect of a force enhancing transmission ratio by the longer lever arm distance between axis D and axis A compared to the shorter lever arm distance between axis B and axis A supports the manual force once the end stop of the limited play is reached. However, the major portion of the total force remains the assistance force. Between figure 7 and 8 the servo actuation lever 7 and the shift actuation lever 1b have rotated concertedly about axis A in a counter-clockwise way. This is due to the fact that the excess of the total force above the overcome resistance force is larger than the maximal spring force of the servo valve 2. In this case the portion 7a of the servo actuation lever 7 stays in contact with the portion 1a of the gearbox shaft 1 and the servo valve 2 is still fully opened to cause a maximum assistance force.

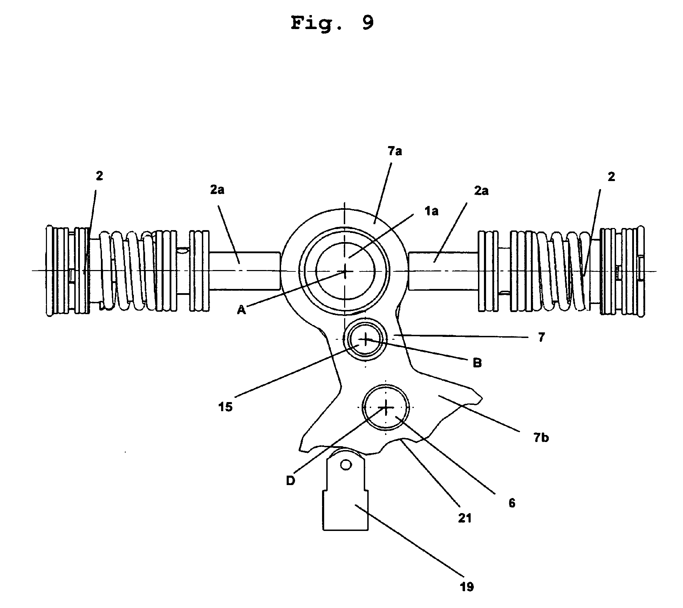

In figure 9 the gear shifting counter-clockwise rotation about axis A has finished and a gear is fully engaged. The driver has stopped to apply a manual force and the spring force of the servo valve 2 has urged the portion 7a of the servo actuation lever 7 back to a central position of the limited play by means of a clockwise rotation of the servo actuation lever 7 about axis B. The servo valve 2 is closed now and no assistance force is applied anymore.

Figures 1 to 9 show the shift actuation lever 7 further comprising a portion 7b. This portion 7b shows a curved radially outward profile comprising recesses wherein the profile 21 is in sliding or rolling contact with a stabilising member 19. During rotation the stabilising member 19 follows the profile 21 of the portion 7b of the shift actuation lever 7 and snaps into a recess in the profile 21 to stabilise the shift actuation lever 7 in a neutral position or when a gear is fully engaged. The stabilisation is, however, only temporary until a manual force is applied such that the stabilising member 19 is urged to leave the recess.

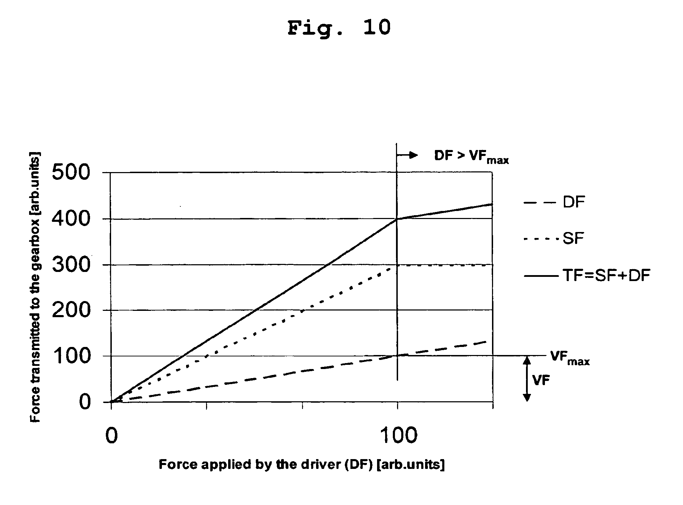

Figure 10 illustrates the forces transmitted to the gearbox as a function of the manual force applied by the driver to the shift lever. The shown units for the force values are arbitrarily chosen and just for illustrative purposes. The force needed to open a servo valve is denoted by VF and ranges from a value of 0 for a closed valve to a value of 100 for a maximally opened valve, the latter denoted as VFₘₐₓ. As long as the manual force DF is below the force VFₘₐₓ needed for the maximal opening of a servo valve the assistance force SF increases proportionally with an increase of the manual force DF. This is because the pressure in the servo cylinder corresponds to the opening state of the servo valve. Apart from a linearity there are of course other correlations possible. Just for the sake of legibility the assistance force SF is shown as three times higher than the manual force DF. In fact, the assistance force SF may be many factors higher than the manual force to provide high driving comfort.

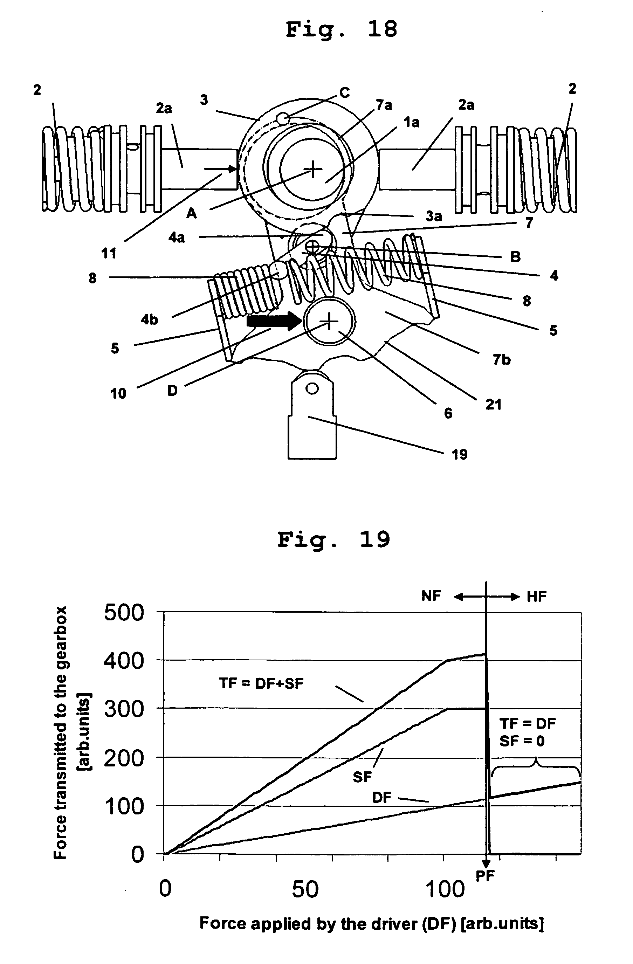

The total force TF transmitted to the gearbox is the sum of the manual force DF and the assistance force SF. A maximal assistance force SF is reached when the inner surface of the opening of the portion 7a of the servo actuation lever 7 touches the portion 1a of the gearbox shaft and the servo valve 2 is open to its maximum. At this stage the total force TF should be large enough to overcome the resistance force in the gearbox to shift gears. In case a gear got stuck and the resistance force is larger, a further increase of the manual force DF may be necessary. This, however, may damage the gearbox or other parts. An advantageous reduction mechanism may reduce this risk as shown in Fig. 19.

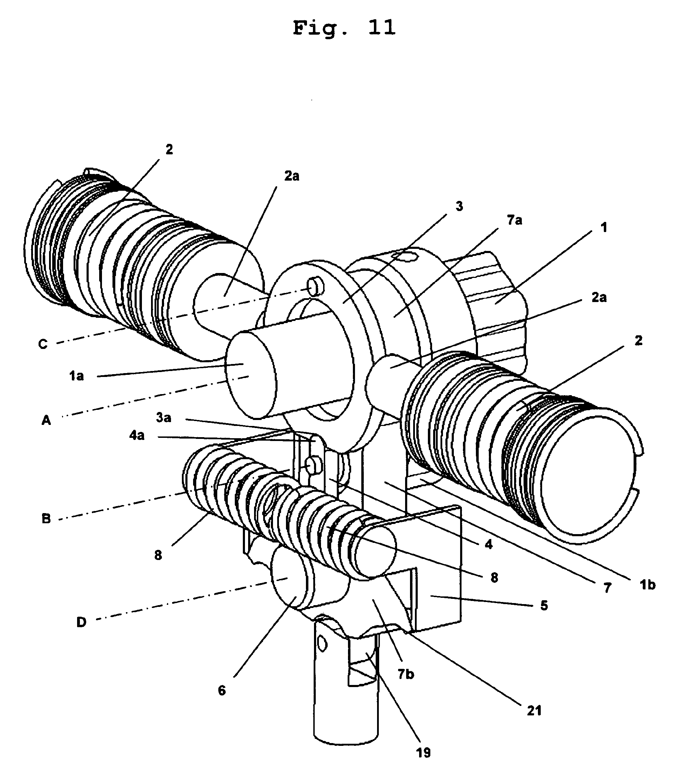

Figures 11 to 13 give an impression of a second preferred embodiment of the gear shift system with a mechanical reduction mechanism in a perspective view, a cross-sectional side view and a front view. Two servo valves 2 of a servo assistance system (not shown) are each connectedto one of two chambers in an air pressure servo cylinder system (not shown). Opening and closing of the servo valves 2 controls the servo assistance force in the one or the other direction of a gear shift command from the shift lever connection point 6 to the gearbox (not shown). The manual force on the shift lever connection point 6 is transmitted to the gearbox via a servo actuation lever 7 to the gearbox shaft 1 that transfers movement to the gearbox. The servo actuation lever 7 is pivotably connected to the axis B such that two portions 7a and 7b of the servo actuation lever 7 extend from the axis B. One portion of the servo actuation lever 7 extending from the axis B comprises a portion 7a that frames a portion 1a of the gearbox shaft 1 which has the form of an appendix. The axis B is rotatably arranged to the gearbox shaft 1 by means of a shift actuation lever 1b. The manual force applied to the shift lever connection point 6 is therefore transmitted to the gearbox shaft 1 via the shift actuation lever 1b. It is important to note that there is some significant play between the gearbox shaft portion 1a and the portion 7a of the servo actuation lever 7. This play allows a limited pivotal movement of the servo actuation lever 7 around the axis B when a manual force is applied to the shift lever connection point 6 that is coupled with the other portion 7b of the servo actuation lever 7. The reducing mechanism comprises a control ring 3 and a control lever 4. The control ring is connected coaxially to the portion 7a of servo actuation lever 7 with its centre located in neutral gear position on the fixed gearbox shaft axis A. The control ring comprises a pivot connection to the portion 7a of the servo actuation lever 7 yielding a control ring axis C that allows a pivotal movement of the control ring 3 relative to the servo actuation lever 7. In parallel to the servo actuation lever 7 the control lever 4 is pivotably connected to the axis B such that two portions of the control lever 4 extend from the axis B. There is no fixed connection between control lever 4 and servo actuation lever 7 such that a relative pivotal movement is possible. One end portion 4a of the control lever 4 is engaged by a frictional contact with a groove 3a in control ring 3. The groove 3a is arranged in the control ring 3 opposing the pivot connection yielding control ring axis C. As long as the end portion 4a of the control lever 4 is in frictional contact with the groove 3a in the control ring 3 the control ring 3 and the control lever 4 can perform a pivotal movement relative to the servo actuation lever 7 in a concerted manner. Two control springs 8 fixed to lugs 5 of the servo actuation lever 7 bias in opposite directions against the other end portion 4b of the control lever 4. Thereby, the control springs 8 work against the concerted pivotal movement relative to the servo actuation lever 7 of the control ring 3 and the control lever 4. It is an important feature of the control ring 3 that its outer diameter is larger than the outer diameter of the portion 7a of the servo actuation lever 7 such that the outer control ring surface is in abutting contact with appendices 2a of the servo valves 2 to serve as a cam. The inner diameter is larger than the diameter of the gearbox shaft portion 1a that is fed through both the portion 7a of servo actuation lever 7 and the control ring 3.

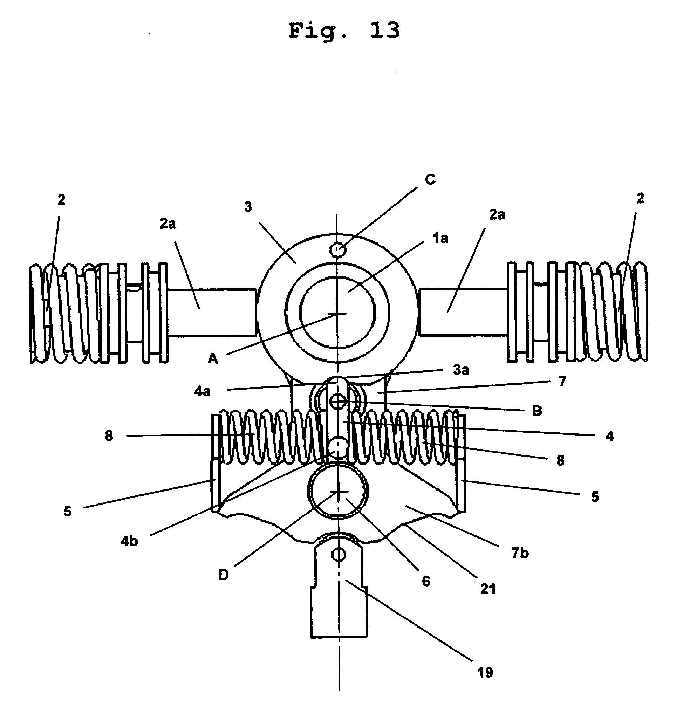

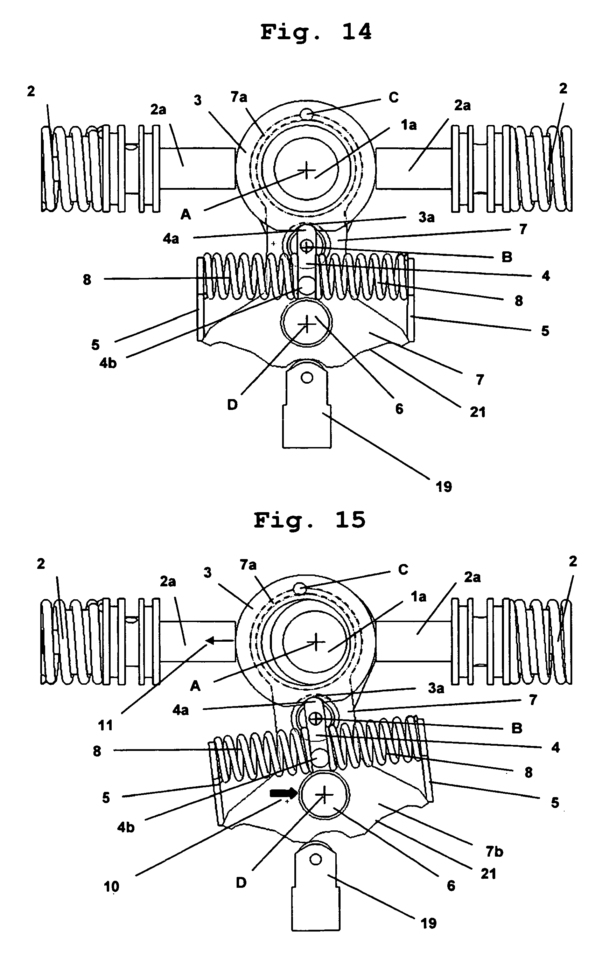

Figure 14 shows the initial position of the reduction mechanism of the gear shift system as it is shown in figure 13. In addition, the position of the portion 7a of the servo actuation lever 7 is illustrated in dashed lines.

In figures 15 to 18 it is assumed that a high resistance in the gearbox, e.g. a stuck gear, prevents a rotation of the gearbox shaft 1 and a rotation of axis B around gearbox shaft axis A by means of a pivotal movement of shift actuation lever 1a. Axis B is therefore shown stationary with respect to fixed gearbox shaft axis A.

In figure 15 a normal manual force 10 is applied to the shift lever connection point 6 resulting in a pivotal movement of the servo actuation lever 7 around the axis B. As a portion of the outer control ring surface biases against one servo valve appendix 2a the servo valve opens gradually with the pivotal movement of the control ring 3 around the axis B due to the force applied to the shift lever connection point 6. Therefore, the assistance force increases gradually with the manual force applied to the shift lever connection point 6.

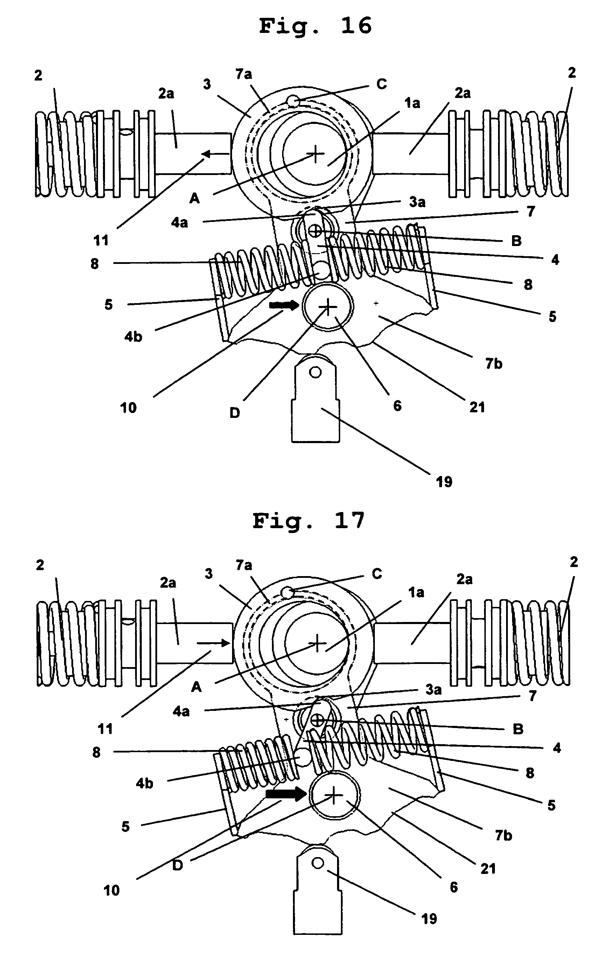

In figure 16 the manual force on the shift lever connection point 6 is further increased such that the control ring 3 touches with a portion of its inner surface the gearbox shaft portion 1a protruding through the portion 7a of the servo actuation lever 7 and the control ring 3. This is the point of maximal opening of the servo valve 2 and consequently the point of maximal assistance force.

A further increase of the manual force on the shift lever connection point 6 as shown in figure 17 does not result in an increase of assistance force but in a concerted pivotal movement of the control ring 3 and the control lever 4 relative to the servo actuation lever 7. As the inner diameter of the opening in the portion 7a of the servo actuation lever 7 is larger than the inner diameter of the control ring 3, the manual force transferred to the contact point at the control ring axis C and its reaction force at the contact point of the control ring 3 with the gearbox shaft portion 1a form a pure moment that results in a pivotal movement relative to the servo actuation lever 7 of the control ring 3 around the control ring axis C. The control lever 4 pivots accordingly around the axis B due to the frictional contact between the control ring 3 and the control lever 4. The manual force must be large enough to overcome the force applied to the end portion 4b of the control lever by the control springs 8. The circular paths of the end portion 4a and the groove 3a of the control ring 3 relative to the servo actuation lever 7 branch out. As it is shown in figure 17 the manual force applied to the shift lever connection point 6 has reached a threshold value such that the concerted pivot movement relative to the servo actuation lever 7 reaches a degree of deflexion when the end portion 4a of the control lever 4 is completely released off the groove 3a of the control ring 3 and the frictional contact force between control ring 3 and control lever 4 falls down abruptly. The servo valves 2 and the servo actuation lever 7 are decoupled in the moment when the applied force on the shift lever connection point 6 exceeds the threshold value. The spring force of the opened servo valve 2 draws back the control ring 3 and closes.

Figure 18 shows that the spring force of the servo valve 2 has drawn back the control ring 3 completely and the servo valve appendix 2a touches the portion 7a of the servo actuation lever 7. The servo valve 2 is closed in this moment and the assistance force is therefore switched off to protect the gearbox from further force effects that could damage the gearbox. The manual force that is still transferred to the gearbox is about factors lower than the assistance force and safe to apply without any assistance force.

Figure 19 illustrates the forces transmitted to the gearbox as a function of the force applied by the driver to the shift lever. As long as the manual force DF is normal and below a threshold value the assistance force SF increases proportionally with an increase of the manual force DF. The total force TF transmitted to the gearbox is the sum of manual force DF and assistance force SF that is typically factors higher than the manual force DF. A maximal assistance force SF is reached when the control ring 3 touches the gearbox shaft portion 1a and the servo valve 2 is open to its maximum. A further increase of the manual force DF is necessary to overcome the force of the control springs 8 in order to release the reducing mechanism. When the threshold value PF is reached the frictional contact between the control ring 3 and the control lever 4 falls down abruptly and the servo valve 2 closes. The assistance force SF is switched off in this moment and the total force TF that is transmitted to the gearbox is the manual force DF only.

## Claims

1. A gear shift system comprising a shift lever, a gearbox, a servo mechanism, a medium for transferring shift commands from the shift lever to the servo mechanism and a servo actuation lever (7),
wherein a shift command is transferred by said medium to a gearbox shaft (1) via at least one lever arm, including at least one shift actuation lever (1b),
the servo mechanism is controlled by a servo valve (2), and the servo valve (2) is controlled by the servo actuation lever (7) arranged to transfer movement of the medium for transferring shift commands to the servo valve (2), wherein the servo actuation lever (7) has a portion (7a) arranged with a limited play to a portion (1a) of the gearbox shaft (1) allowing a displacement of said portion (7a) of the servo actuation lever (7) in relation to said gearbox shaft (1),
wherein the servo actuation lever (7) is connected to the shift actuation lever (1b) so as to be rotatable about an axis (B) essentially parallel to the longitudinal axis (A) of the gearbox shaft (1) within the limited play between said portion (1a) of the gearbox shaft (1) and said portion (7a) of the servo actuation lever (7), **characterised in that** the servo mechanism is arranged to apply a servo turning moment on the shift actuation lever (1b).

2. A gear shift system according to claim 1, wherein the shift actuation lever (1b) extends radially from the gearbox shaft (1) and is arranged to transfer a shift command by means of a rotational movement about the longitudinal axis (A) of the gearbox shaft (1).

3. A gear shift system according to any one of the preceding claims, the servo actuation lever (7) is arranged rotatably about the longitudinal axis (A) of the gearbox shaft with a limited play between said portion (1a) of the gearbox shaft (1) and said portion (7a) of the servo actuation lever (7).

4. A gear shift system according to any one of the preceding claims, wherein the shift lever is adapted to transfer a shift command in form of a manual force of the driver towards the servo actuation lever(7) to cause a rotation of the servo actuation lever (7) about an axis (B) parallel to the longitudinal axis (A) of the gearbox shaft (1) within the limited play between said portion (1a) of the gearbox shaft (1) and said portion (7a) of the servo actuation lever (7).

5. A gear shift system according to any one of the preceding claims, wherein the at least one servo valve (2) is controlled by a displacement of said portion (7a) of the servo actuation lever (7) relative to the shift actuation lever (1b) within the limited play between said portion (1a) of the gearbox shaft (1) and said portion (7a) of the servo actuation lever (7).

6. A gear shift system according to any one of the preceding claims, wherein the servo actuation lever (7) comprises an opening through which said portion (1a) of the gearbox shaft (1) protrudes, wherein the radial extension of the opening is larger than the radial extension of said portion (1a) of the gearbox shaft (1).

7. A gear shift system according to any one of the preceding claims, wherein the servo mechanism is controlled by two servo valves (2).

8. A gear shift system according to claim 7, wherein the servo mechanism is arranged to apply a bidirectional servo turning moment on the shift actuation lever (1b), wherein the direction of the turning moment depends on which one of the two servo valves (2) is actuated.

9. A gear shift system according to any one of the preceding claims, wherein the servo mechanism comprises a hydraulic or pneumatic servo cylinder (11) which is arranged to apply a pressure force causing a servo turning moment on the shift actuation lever (1b).

10. A gear shift system according to any one of the preceding claims, wherein the servo actuation lever (7) is arranged to transfer the manual force on the shift lever towards at least one of the servo valves (2) within the limited play between said portion (1a) of the gearbox shaft (1) and said portion (7a) of the servo actuation lever (7).

11. A gear shift system according to any one of the preceding claims, wherein the servo actuation lever (7) is arranged to transfer the manual force on the shift lever to apply a manual turning moment on the shift actuation lever (1b) adding to the servo turning moment when the servo actuation lever (7) has reached an end stop of the limited play between said portion (1a) of the gearbox shaft (1) and said portion (7a) of the servo actuation lever (7).

12. A gear shift system according to claim 11, wherein a servo valve (2) is fully opened when the servo actuation lever (7) reaches an end stop of the limited play play between said portion (1a) of the gearbox shaft (1) and said portion (7a) of the servo actuation lever (7).

13. A gear shift system according to any one of the preceding claims, wherein the gear shift system comprises a reducing mechanism.

14. A gear shift system according to claim 13, wherein the reducing mechanism is arranged to transfer movement of the servo actuation lever to the servo valve (2).

15. A gear shift system according to claim 13 or 14, wherein said reducing mechanism is arranged to decouple the servo valve (2) and the servo actuation lever (7) when the applied force on the shift lever exceeds a threshold value and wherein the reducing mechanism is mechanical.

16. A gear shift system according to any one of the claims 13 to 15, wherein said reducing mechanism comprises a control ring (3) and a control lever (4) in mechanical contact, wherein said servo valve (2) is spring loaded to close when servo valve (2) and the medium for transferring shift commands are decoupled, and wherein said control ring (3) is in mechanical communication with the servo valve (2) by a pivotal movement of the control ring (3) actuating the servo valve (2).

17. A gear shift system according to claim 16, wherein said control lever (4) is spring loaded so that mechanical contact to the control ring (3) is released when the applied force on the shift lever exceeds a threshold value.

## Patentansprüche

1. Gangschaltsystem mit einem Schalthebel, einem Getriebe, einem Servomechanismus, einem Medium zum Übertragen von Schaltbefehlen von dem Schalthebel zu dem Servomechanismus und einem Servobetätigungshebel (7),
wobei ein Schaltbefehl von dem Medium zu einer Getriebewelle (1) über wenigstens einen Hebelarm, einschließlich wenigstens eines Schaltbetätigungshebels (1b), übertragen wird,
wobei der Servomechanismus durch einen Servoventil (2) gesteuert wird und das Servoventil (2) durch den Servobetätigungshebel (7) gesteuert wird, der dazu ausgestaltet ist, Bewegungen des Mediums zum Übertragen von Schaltbefehlen zu dem Servoventil (2) zu übertragen,
wobei der Servobetätigungshebel (7) einen Bereich (7a) hat, der mit begrenztem Spiel zu einem Bereich (1a) der Getriebewelle (1) ausgestaltet ist, was eine Auslenkung des Bereichs (7a) des Servobetätigungshebels (7) in Bezug auf die Getriebewelle (1) erlaubt,
wobei der Servobetätigungshebel (7) mit dem Schaltbetätigungshebel (1b) verbunden ist, um so innerhalb des begrenzten Spiels zwischen dem Bereich (1a) der Getriebewelle (1) und dem Bereich (7a) des Servobetätigungshebels (7) drehbar um eine Achse (B) im Wesentlichen parallel zu der Längsachse (A) der Getriebewelle (1) zu sein, **dadurch gekennzeichnet, dass** der Servomechanismus dazu ausgestaltet ist, ein Servodrehmoment auf den Schaltbetätigungshebel (1b) auszuüben.

2. Gangschaltsystem nach Anspruch 1, wobei der Schaltbetätitungshebel (1b) sich radial von der Getriebewelle (1) erstreckt und dazu ausgestaltet ist, um einen Schaltbefehl mittels einer Rotationsbewegung um die Längsachse (A) der Getriebewelle (1) zu übertragen.

3. Gangschaltsystem nach einem der vorhergehenden Ansprüche, wobei der Servobetätigungshebel (7) schwenkbar zur Längsachse (A) der Getriebewelle mit einem begrenzten Spiel zwischen dem Bereich (1a) der Getriebewelle (1) und dem Bereich (7a) des Servobetätigungshebels (7) ausgestaltet ist.

4. Gangschaltsystem nach einem der vorhergehenden Ansprüche, wobei der Schalthebel dazu angepasst ist, um einen Schaltbefehl in Form einer manuellen Kraft des Fahrers zu dem Servobetätigungshebel (7) zu übertragen, um eine Drehung des Servobetätigungshebels (7) um eine Achse (B) parallel zu der Längsachse (A) der Getriebewelle (1) innerhalb des begrenzten Spiels zwischen dem Bereich (1a) der Getriebewelle (1) und dem Bereich (7a) des Servobetätigungshebels (7) zu veranlassen.

5. Gangschaltsystem nach einem der vorhergehenden Ansprüche, wobei das wenigstens eine Servoventil (2) durch eine Auslenkung des Bereichs (7a) des Servobetätigungshebels (7) in Bezug auf den Schaltbetätigungshebel (1b) innerhalb des begrenzten Spiels zwischen dem Bereich (1a) der Getriebewelle (1) und dem Bereich (7a) des Servobetätigungshebels (7) gesteuert wird.

6. Gangschaltsystem nach einem der vorhergehenden Ansprüche, wobei der Servobetätigungshebel (7) eine Öffnung hat, durch die der Bereich (1a) der Getriebewelle (1) vorsteht, wobei die radiale Ausdehnung der Öffnung größer als die radiale Ausdehnung des Bereichs (1a) der Getriebewelle (1) ist.

7. Gangschaltsystem nach einem der vorhergehenden Ansprüche, wobei der Servomechanismus durch zwei Servoventile (2) gesteuert wird.

8. Gangschaltsystem nach Anspruch 7, wobei der Servomechanismus dazu ausgestaltet ist, ein bidirektionales Servodrehmoment auf den Schaltbetätigungshebel (1b) auszuüben, wobei die Richtung des Drehmoments davon abhängt, welches der beiden Servoventile (2) betätigt wird.

9. Gangschaltsystem nach einem der vorhergehenden Ansprüche, wobei der Servomechanismus einen hydraulischen oder pneumatischen Servozylinder (11) aufweist, der dazu ausgestaltet ist, eine Druckkraft auszuüben, die ein Servodrehmoment auf den Schaltbetätigungshebel (1b) bewirkt.

10. Gangschaltsystem nach einem der vorhergehenden Ansprüche, wobei der Servobetätigungshebel (7) dazu ausgestaltet ist, die manuelle Kraft auf den Schalthebel zu wenigstens einem der Servoventile (2) innerhalb des begrenzten Spiels zwischen dem Bereich (1a) der Getriebewelle (1) und dem Bereich (7a) des Servobetätigungshebels (7) zu übertragen.

11. Gangschaltsystem nach einem der vorhergehenden Ansprüche, wobei der Servobetätigungshebel (7) dazu ausgestaltet ist, die manuelle Kraft auf den Schalthebel zu übertragen, um ein manuelles Drehmoment auf den Schaltbetätigungshebel (1b) anzuwenden, das dem Servodrehmoment hinzugefügt wird, wenn der Servobetätigungshebel (7) einen Endanschlag des begrenzten Spiels zwischen dem Bereich (1a) der Getriebewelle und dem Bereich (7a) des Servobetätigungshebels (7) erreicht hat.

12. Gangschaltsystem nach Anspruch 11, wobei ein Servoventil (2) vollständig geöffnet ist, wenn der Servobetätigungshebel (7) einen Endanschlag des begrenzten Spiels zwischen dem Bereich (1a) der Getriebewelle (1) und dem Bereich (7a) des Servobetätigungshebels (7) erreicht.

13. Gangschaltsystem nach einem der vorhergehenden Ansprüche, wobei das Gangschaltsystem einen Reduziermechanismus aufweist.

14. Gangschaltsystem nach Anspruch 13, wobei der Reduziermechanismus dazu ausgestaltet ist, Bewegung des Servobetätigungshebels auf das Servoventil (2) zu übertragen.

15. Gangschaltsystem nach Anspruch 13 oder 14, wobei der Reduziermechanismus dazu ausgestaltet ist, das Servoventil (2) und den Servobetätigungshebel (7) zu entkoppeln, wenn die auf den Schalthebel ausgeübte Kraft einen Schwellenwert überschreitet, und wobei der Reduziermechanismus mechanisch ist.

16. Gangschaltsystem nach einem der Ansprüche 13 bis 15, wobei der Reduziermechanismus einen Steuerring (3) und einen Steuerhebel (4) in mechanischem Kontakt aufweist, wobei das Servoventil (2) mit einer Feder zum Schließen belastet ist, wenn das Servoventil (2) und das Medium zum übertragen von Schaltbefehlen entkoppelt sind, und wobei der Steuerring (3) in mechanischer Kommunikation mit dem Servoventil (2) steht, indem eine Drehbewegung des Steuerrings (3) das Servoventil (2) betätigt.

17. Gangschaltsystem nach Anspruch 16, wobei der Steuerhebel (4) mit einer Feder belastet ist, so dass der mechanische Kontakt zu dem Steuerring (3) aufgehoben wird, wenn die auf den Schalthebel ausgeübte Kraft einen Schwellenwert überschreitet.

## Revendications

1. Système de changement de vitesse comprenant un levier de changement de vitesse, une boîte de vitesse, un servomécanisme, un moyen permettant de transférer des instructions de changement de vitesse du levier de changement de vitesse au servomécanisme et un levier de servocommande (7),
dans lequel une instruction de changement de vitesse est transférée par ledit moyen à un arbre de transmission (1) par le biais d'au moins un bras de levier, incluant au moins un levier de commande de changement de vitesse (1b),
le servomécanisme est commandé par une servosoupape (2) et la servosoupape (2) est commandée par le levier de servocommande (7) agencé pour transférer le mouvement du moyen permettant de transférer des instructions de changement de vitesse à la servosoupape (2), dans lequel le levier de servocommande (7) comporte une partie (7a) agencée avec un jeu limité par rapport à une partie (1a) de l'arbre de transmission (1), en permettant un décalage de ladite partie (7a) du levier de servocommande (7) par rapport audit arbre de transmission (1),
dans lequel le levier de servocommande (7) est en prise avec le levier de commande de changement de vitesse (1b) de façon à pouvoir tourner autour d'un axe (B) essentiellement parallèle à l'axe longitudinal (A) de l'arbre de transmission (1) dans les limites du jeu existant entre ladite partie (1a) de l'arbre de transmission (1) et ladite partie (7a) du levier de servocommande (7), **caractérisé en ce que** le servomécanisme est agencé pour appliquer un moment de couple d'asservissement au levier de commande de changement de vitesse (1b).

2. Système de changement de vitesse selon la revendication 1, dans lequel le levier de commande de changement de vitesse (1b) s'étend radialement de l'arbre de transmission (1) et est agencé pour transférer une instruction de changement de vitesse par un mouvement de rotation autour de l'axe longitudinal (A) de l'arbre de transmission (1).

3. Système de changement de vitesse selon l'une quelconque des revendications précédentes, dans lequel le levier de servocommande (7) est agencé mobile en rotation autour de l'axe longitudinal (A) de l'arbre de transmission avec un jeu limité entre ladite partie (1a) de l'arbre de transmission (1) et ladite partie (7a) du levier de servocommande (7).

4. Système de changement de vitesse selon l'une quelconque des revendications précédentes, dans lequel le levier de changement de vitesse est conçu pour transférer une instruction de changement de vitesse sous la forme d'une force manuelle exercée par le conducteur en direction du levier de servocommande (7) dans le but de provoquer une rotation du levier de servocommande (7) autour d'un axe (B) parallèle à l'axe longitudinal (A) de l'arbre de transmission (1), dans les limites du jeu existant entre ladite partie (1a) de l'arbre de transmission (1) et ladite partie (7a) du levier de servocommande (7).

5. Système de changement de vitesse selon l'une quelconque des revendications précédentes, dans lequel au moins une servosoupape (2) est commandée par un décalage de ladite partie (7a) du levier de servocommande (7) par rapport au levier de commande de changement de vitesse (1b), dans les limites du jeu existant entre ladite partie (1a) de l'arbre de transmission (1) et ladite partie (7a) du levier de servocommande (7).

6. Système de changement de vitesse selon l'une quelconque des revendications précédentes, dans lequel le levier de servocommande (7) comprend une ouverture à travers laquelle ladite partie (1a) de l'arbre de transmission (1) fait saillie, l'étendue radiale de l'ouverture étant plus grande que l'étendue radiale de ladite partie (1a) de l'arbre de transmission (1).

7. Système de changement de vitesse selon l'une quelconque des revendications précédentes, dans lequel le servomécanisme est commandé par deux servosoupapes (2).

8. Système de changement de vitesse selon la revendication 7, dans lequel le servomécanisme est agencé pour appliquer un moment de couple d'asservissement bidirectionnel au levier de commande de changement de vitesse (1b), le sens du moment de couple dépendant de celle des deux servosoupapes (2) qui est actionnée.

9. Système de changement de vitesse selon l'une quelconque des revendications précédentes, dans lequel le servomécanisme comprend un servocylindre hydraulique ou pneumatique (11) qui est agencé pour appliquer une force de pression entrainant l'application d'un moment de couple d'asservissement au levier de commande de changement de vitesse (1b).

10. Système de changement de vitesse selon l'une quelconque des revendications précédentes, dans lequel le levier de servocommande (7) est agencé pour transférer la force manuelle au levier de changement de vitesse vers au moins l'une des deux servosoupapes (2), dans les limites du jeu existant entre ladite partie (1a) de l'arbre de transmission (1) et ladite partie (7a) du levier de servocommande (7).

11. Système de changement de vitesse selon l'une quelconque des revendications précédentes, dans lequel le levier de servocommande (7) est agencé pour transférer la force manuelle au levier de changement de vitesse dans le but d'appliquer un moment de couple manuel au levier de commande de changement de vitesse (1b) s'ajoutant au moment de couple d'asservissement lorsque le levier de servocommande (7) a atteint une butée de fin de course d'une limite du jeu existant entre ladite partie (1a) de l'arbre de transmission (1) et ladite partie (7a) du levier de servocommande (7).

12. Système de changement de vitesse selon la revendication 11, dans lequel une servosoupape (2) est complètement ouverte lorsque le levier de servocommande (7) atteint une butée de fin de course d'une limite du jeu existant entre ladite partie (1a) de l'arbre de transmission (1) et ladite partie (7a) du levier de servocommande (7).

13. Système de changement de vitesse selon l'une quelconque des revendications précédentes, dans lequel le système de changement de vitesse comprend un mécanisme de démultiplication.

14. Système de changement de vitesse selon la revendication 13, dans lequel le mécanisme de démultiplication est agencé pour transférer le mouvement du levier de servocommande à la servosoupape (2).

15. Système de changement de vitesse selon la revendication 13 ou 14, dans lequel ledit mécanisme de démultiplication est agencé pour désaccoupler la servosoupape (2) et le levier de servocommande (7) lorsque la force appliquée au levier de changement de vitesse dépasse une valeur de seuil, et dans lequel le mécanisme de démultiplication est mécanique.

16. Système de changement de vitesse selon l'une quelconque des revendications 13 à 15, dans lequel ledit mécanisme de démultiplication comprend une bague de commande (3) et un levier de commande (4) en contact mécanique, ladite servosoupape (2) étant chargée par ressort pour se fermer lors du désaccouplement de la servosoupape (2) et du moyen permettant de transférer des instructions de changement de vitesse, et ladite bague de commande (3) étant mise en communication mécanique avec la servosoupape (2) par un mouvement pivotant de la bague de commande (3) actionnant la servosoupape (2).

17. Système de changement de vitesse selon la revendication 16, dans lequel ledit levier de commande (4) est chargé par ressort de façon à relâcher le contact mécanique avec la bague de commande (3) lorsque la force appliquée au levier de changement de vitesse dépasse une valeur de seuil.
